# EUROPÄISCHE PATENTSCHRIFT

(11) **EP 1 336 767 B1**
(45) Veröffentlichungstag und Bekanntmachung des Hinweises auf die Patenterteilung: **13.08.2008**
(21) Anmeldenummer: 03003134.8
(22) Anmeldetag: 13.02.2003
(51) Int. Cl.: F16D 1/10

(54) **Kupplung für modular aufgebaute Werkzeughalterarme**
Coupling for modular tool holding arm
Dispositif de couplage pour bras pourvu d'un porte-outil de construction modulaire

(30) Priorität: 14.02.2002 DE 10206168
(43) Veröffentlichungstag der Anmeldung: 20.08.2003
(73) Patentinhaber: Gühring, Jörg, Dr., 72458 Albstadt (DE)
(72) Erfinder: Kleiner, Gilbert, c/o Gühring oHG, 72488 Sigmaringen-Laiz (DE)
(74) Vertreter: Winter, Brandl, Fürniss, Hübner Röss, Kaiser, Polte Partnerschaft Patent- und Rechtsanwaltskanzlei

(56) Entgegenhaltungen:
- EP-A- 0 794 337
- DE-A- 19 724 654
- DE-C- 742 877

## Beschreibung

Die Erfindung betrifft eine Kupplung, insbesondere eine Hochlastkupplung, für modular aufgebaute Werkzeughalterarme gemäß dem Oberbegriff des Anspruchs 1, und einen mit der erfindungsgemäßen Kupplung ausgestatteten Werkzeughalterarm und dessen Einzelmodule, insbesondere einen Einsatzwerkzeug-Trägerstück, ein Verlängerungsstück und ein Grundaufnahmestück, sowie eine mit einer entsprechenden Schnittstelle ausgerüstete Werkzeugmaschine.

Die Werkzeughalterarme heutiger Werkzeugmaschinen sind in der Regel modular aufgebaut, um eine leichte Konfigurierbarkeit und kleine Rüstzeiten und damit einen wirtschaflichen Betrieb sicherzustellen. Ein solcher Werkzeughalterarm kann beispielsweise die Einzelmodule Werkzeugaufnahme bzw. Einsatzwerkzeug-Trägerkopf (z.B. Bohrfutter, Fräseraufnahmen, Spannfutter für Spannzangen, Bohrköpfe etc.), Verlängerungs- bzw. Zwischenstück (z.B. Bohrstangen, HSK-Grundschäfte, Bohrfutteraufnahmen, Aufsteckdorne etc.) und Grundaufnahmestück (SK-Aufnahmen, VDI-Halter, Reduzierungen etc.) aufweisen. Bei bekannten Kupplungen erfolgt die Kraftübertragung dabei meist reibschlüssig durch einen aus einem zentralen Zapfen und einer entsprechenden Aufnahme gebildeten Wellen-Naben-Presssitz (Steilkegelsysteme, HSK-Systeme, Schrumpffutter), formschlüssig über radial außermittig angeordnete Mitnehmersteine, die in entsprechende Ausnehmungen des jeweiligen Gegenstücks eingreifen oder auch form- und kraftschlüssig über zentrale Zapfen und entsprechende Aufnahmen, die ein Profil aufweisen, beispielsweise ein Polygonprofil.

DIN 69893-1 und DIN 69063-1 offenbaren eine Kupplung für modulare Werkzeuge, mit einem Kegel-Hohlschaft mit Plananlage (DIN 69893-1) und einer entsprechenden zentralen, achsensymetrischen Aufnahme (DIN 69063-1).

Es werden auch Kupplungen mit zwischengeschobenen Mitnehmerringen eingesetzt, die jeweils beiderseits sowohl Mitnehmersteine als auch zentrale Zapfen aufweisen und zwei entsprechende Kupplungsabschnitte miteinander verbinden oder Hohlschaftkegelsysteme (VDI-Halter), die zusätzlich zu einem kegelförmigen Welle-Nabe-Sitz Mitnehmersteine aufweisen.

Bei heutige Fertigungsmethoden, beispielsweise Bohren mit Wechselplatten-Bohrsystemen, insbesondere bei zweioder mehrschneidig aufgebauten Systemen (beispielsweise Gühring LT 800 WP), Highspeed-Cutting oder Trockenbearbeitung, bei denen hohe Drehzahlen und Vorschübe gefahren werden sowie mit großen Werkzeugdurchmessern gearbeitet wird, treten hohe Axialkräfte und Torsionsmomente auf. Sie erfordern daher Kupplungen zwischen den Einzelmodulen, die sehr hohen Anforderungen hinsichtlich der Torsionsbelastbarkeit und Steifigkeit genügen und hohen Gesamtbelastungen standhalten. Herkömmliche Kupplungen gelangen dabei stellenweise an ihren Grenzen.

Aufgabe der vorliegenden Erfindung ist es daher, eine Kupplung für modular aufgebaute Werkzeughalterarme, sowie einen mit der erfindungsgemäßen Kupplung ausgestatteten Werkzeughalterarm und dessen Einzelmodule, insbesondere ein Einsatzwerkzeug-Trägerstück, ein Verlängerungs- bzw. Zwischenstück und ein entsprechendes Grundaufnahmestück, und darüber hinaus eine Werkzeugmaschine mit einer entsprechenden Schnittstelle zu schaffen, die hinsichtlich der oben stehenden Anforderungen optimiert sind und bei möglichst einfachem Aufbau wirtschaftlich herzustellen sind.

Diese Aufgabe wird hinsichtlich der Kupplung durch die Merkmale des Anspruchs 1 gelöst, hinsichtlich des Werkzeughalterarms durch die Merkmale des Anspruchs 15, hinsichtlich des Einsatzwerkzeug-Trägerstücks durch die Merkmale des Anspruchs 12, hinsichtlich des Verlängerungs- bzw. Zwischenstücks durch die Merkmale des Anspruchs 13, hinsichtlich des Grundaufnahmestücks durch die Merkmale des Anspruchs 14, und hinsichtlich der Werkzeugmaschine mit den Merkmalen des Anspruchs 16.

Die Kupplung besteht aus einem männlichen Kupplungsabschnitt mit einem zentralen Zapfen und einem weiblichen Kupplungsabschnitt mit einer zentralen Aufnahme, die jeweils den Abschluss eines Moduls des Werkzeugarms bilden, also beispielsweise des Einsatzwerkzeug-Trägerstücks und der Grundaufnahme. Ineinandergesteckt bilden die beiden Kupplungsabschnitte einen ersten Kraftübertragungsbereich, nämlich einem Welle-Nabe-Sitz in Presspassung, zumindest aber in Übergangspassung, in dem formschlüssig oder form- und kraftschlüssig Kraft übertragen wird. Zusätzlich weist die Kupplung noch zumindest einen weiteren Kraftübertragungsbereich auf, in dem zusätzlich Kraft übertragen wird. Auf diese Weise wird die insgesamt von der Kupplung übertragbare Kraft gesteigert.

Die Kraftübertragung in den Kraftübertragungsbereichen führt allerdings jeweils zu Spannungsfeldern im Material der Kupplungsabschnitte, die je nach Art und Ausprägung der Kraftübertragungsbereiche jeweils unterschiedliche Richtung, Stärke und Lage aufweisen und unterschiedliche Dehnungs bzw. Stauchungseinflüsse haben und wiederum auf die Kraftübertragungsfähigkeit der jeweils anderen Kraftübertragungsbereiche einwirken können. Auch eine spezielle Formgebung eines der Kraftübertragungsbereiche kann sich negativ auf die Kraftübertragungsfähigkeit der jeweils anderen Kraftübertragungsbereiche auswirken, beispielsweise bei Kerben aufgrund der Kerbwirkung. Aus diesen Gründen kann es zu Störungen in der Kraftübertragung kommen, wenn die Spannungsfelder der einzelnen Kraftübertragungsbereiche durch die jeweils anderen Kraftübertragungsbereiche beeinflusst werden. So kann es beispielsweise durch ein nur an diskreten Stellen auf dem Außenumfang anliegendes Spannungsfeld beispielsweise zu einer Radialverformung und damit einer verminderten Rundlaufgenauigkeit des Welle-Nabe-Sitzes kommen, was zu einer verminderten Kraftübertragungsfähigkeit des Welle-Nabe-Sitzes führt.

Erfindungsgemäß wird durch Trennung der zumindest zwei Kraftübertragungsbereiche eine Spannungsüberlagerung vermieden. Dadurch kann nicht nur vermieden werden, dass sich unterschiedliche Spannungskomponenten zu einer Gesamtspannung addieren, die die Materialbelastbarkeit - zumindest auf längere Sicht (vorzeitige Materialermüdung) - übersteigt, sondern auch gegenseitige Störeinflüsse der zumindest zwei Spannungsfelder aufeinander wirksam unterbunden werden. Dies gilt insbesondere für die durch die Spannungsfelder verursachten Verformungen, d.h. Dehnungen/Stauchungen. Auch eine negative Beeinflussung eines Kraftübertragungsbereiches durch die Formgebung eines anderen Kraftübertragungsbereiches wird vermieden. Insgesamt wird dadurch nicht nur eine jeweils optimale und ungestörte Kraftübertragung an den zumindest zwei Kraftübertragungsbereichen (Welle-Nabe-Verbindung und weitere Kraftübertragungsbereiche) erzielt, sondern gleichzeitig auch eine verbesserte Rundlaufgenauigkeit des gesamten Werkzeughalterarms.

Obwohl für den Welle-Nabe-Sitz grundsätzlich verschiedene Ausgestaltungen in Frage kommen, beispielsweise eine zylindrische Presspassung, die durch Einschrumpfen des Werkzeugträgerkopfes in ein Schrumpffutter hergestellt wird, wird in der Ausführungsform gemäß Anspruch 2 vorteilhaft eine kegelige Form des Welle-Nabe-Sitzes gewählt, da sich diese aufgrund hoher Reibungswerte bereits bei bekannten Kupplungen bewährt hat. Insbesondere eine nach Vorgabe des HSK-Systems (DIN 69893) ausgeführte Passung macht die erfindungsgemäße Kupplung auf gängigen, genormten Systemen einsetzbar.

Derartige Hohlkegelsysteme weisen eine hohe Vorspannung auf, die beispielsweise durch Vorspannen der beiden ineinandergesetzten Kupplungsabschnitte mittels einer Differentialschraube erfolgen kann. Die in diesem Falle auftretende Kegelaufweitung aufgrund der Presspassung am Kegel/Hohlkegelschaft wird erfindungsgemäß durch den zumindest einen weiteren Kraftübertragungsbereich nicht beeinflusst; die Kegelaufweitung erfolgt deshalb gleichmäßig über den gesamten Umfang. Andererseits beeinflusst die Kegelaufweitung auch die Kraftübertragung der anderen Kraftübertragungsbereiche nicht, da sie das Spannungsfeld der anderen Kraftübertragungsbereiche nicht überlagert und ihre Auswirkung somit lokal begrenzt sind.

In der Ausführungsform gemäß Anspruch 3 weist die Kupplung einen Welle-Nabe-Sitz in Polygon-Form auf. Mit einem solcherart gestalteten Profil des Welle-Nabe-Sitzes kann nicht nur durch Reibschluss, sondern auch durch Kraftschluss eine Last aufgenommen werden, insgesamt also eine höhere Last als bei alleinigem Reibschluss. Da es bei einem derartigen Profil zu hohen Spannungskonzentrationen an den abgerundeten Ecken des Polygons kommt, ist in diesem Fall eine Trennung der Spannungsfelder besonders wirkungsvoll.

Die Kupplung ist erfindungsgemäss zwischen den Modulen eines Werkzeughalterarms vorgesehen, beispielsweise zwischen einem Einsatzwerkzeug-Trägerkopf oder einer Werkzeugaufnahme und einer entsprechenden Trägerkopfaufnahme oder Spindel des Werkzeughalterarms.

Im Rahmen der Erfindung ist es aber auch möglich, die Trennstelle zwischen einer Grundaufnahme und einem Verlängerungsstück oder zwischen dem Verlängerungsstück und dem Einsatzwerkzeug-Trägerkopf oder zwischen einem in ein Futter einzusetzendem Einsatzwerkzeug und dem in diesem Fall als Spannfutter ausgestalteten Werkzeug-Trägerkopf mit der erfindungsgemäßen Kupplung auszustatten.

In der Ausführungsform nach Anspruch 4 wird der zweite Kraftübertragungsbereich durch zwei aneinander anliegende Planflächen gebildet. Durch die Trennung des Spannungsfeldes am ersten Kraftübertragungsbereich (Welle-Nabe-Sitz) vom Spannungsfeld des zweiten Kraftübertragungsbereichs (aneinander anliegende Planflächen) kommt es einerseits nicht zu einer Verwölbung der aneinander anliegenden Planflächen aufgrund einer eventuell ungleichmässigen Spannungsverteilung über den Umfang des Welle-Nabe-Sitzes, andererseits nicht zu einer ungleichmäßigen Radialverformung am Welle-Nabe-Sitz aufgrund eventuell nicht plangenau anliegender Planlaufflächen.

Insgesamt wird dadurch nicht nur eine jeweils optimalen Kraftübertragung an der Welle-Nabe-Verbindung und am Stumpfstoß der aneinander anliegende Planlaufflächen erzielt, sondern auch eine verbesserte Rund- und Planlaufgenauigkeit des gesamten Werkzeughalterarms.

Bei herkömmlichen HSK-Systemen mit direkt an den Kegel der Welle-Nabe-Verbindung angrenzenden Planflächen, führt ein Druck auf die Planflächen zu einer Spannungsüberlagerung der Spannungen aufgrund des Welle-Nabe-Sitzes und aufgrund des Stumpfstoßes an den Planflächen. Im Gegensatz dazu wächst erfindungsgemäß die Kraft- und Torsionsübertragung an den Planflächen mit ansteigender Gesamtbelastung (und damit ansteigendem Druck auf die Planflächen), so dass mit wachsender Gesamtbelastung ein wachsendes Torsionsmoment übertragen werden kann.

An einem beispielsweise als HSK-System ausgeführten Wellen-Naben-Sitz, der eine hohe radiale Vorspannung aufweist, ist die Torsionsübertragungsfähigkeit der Verbindung auf einen über das gesamte Belastungsspektrum konstanten Wert begrenzt. Bei der erfindungsgemäßen Kupplung kann dagegen bei auftretenden hohen Lasten sozusagen "bei Bedarf" die Torsionsübertragungsfähigkeit gesteigert werden.

Vor diesem Hintergrund sei auch erwähnt, dass es möglich ist, bei gleicher Belastbarkeit die erfindungsgemäße Kupplung mit weniger guten Toleranzen und damit billiger als eine herkömmliche Kupplung zu fertigen, da die erfindungsgemäße Kupplung konstruktionsbedingt höher belastbar ist.

Die Trennung der Spannungsfelder wird dabei gemäß Anspruch 5 bevorzugt durch einen axialen Abstand des Kraftübertragungsbereichs "Welle-Nabe-Sitz" vom Kraftübertragungsbereich "Planflächen" erreicht. Es wären aber beispielsweise auch unterschiedlich vorbehandelte Oberflächen des Welle-Nabe-Sitzes im Bereich der Planlaufflächen im Vergleich zu den vom Bereich der Planlaufflächen entfernt liegenden Oberflächen des Welle-Nabe-Sitzes denkbar.

Besonders einfach kann dieser Abstand zwischen Welle-Nabe-Sitz und den aneinander anliegenden Planflächen gemäß Anspruch 6 durch eine Aussparung des Welle-Nabe-Sitzes im Bereich der Planlaufflächen realisiert werden.

Vorteilhaft ist die Aussparung als Ausnehmung in der zentralen Aufnahme des weiblichen Kupplungsteils ausgeführt. Alternativ dazu kann auch eine Ausnehmung auf dem Zapfen des männlichen Kupplungsteils vorgesehen sein, wobei es allerdings zu Kerbspannungskonzentrationen kommen kann.

Herkömmliche Kupplungen weisen häufige einen (HSK-) Wellen-Naben-Presssitz auf, sowie Mitnehmersteine, die außenumfangsseitig an das weibliche Kupplungsbauteil in dafür vorgesehene Nuten geschraubt werden und im eingekuppelten Zustand in dafür vorgesehene Nuten am Außenumfang des männlichen Kupplungsbauteils eingreifen.

Auf diese Weise werden nicht nur durch Reibschluss im Kegel, sondern auch durch Formschluss an den Mitnehmersteinen Torsionsmomente übertragen. Aufgrund der hohen Vorspannung des Kegelsitzes kommt es dabei schon im unbelasteten Zustand der Kupplung zu einer ungleichmäßigen Kegelaufweitung, insbesondere bei hohen Übermaßen: Die an den Nuten für die Mitnehmersteine geringere Materialdicke führt zu einem dort geringeren Materialwiderstand gegen die Aufweitung; zusätzlich kommt es durch die scharfkantige Form der Nuten zu einer hohen Kerbwirkung. Die Spannungsverteilung erfolgt also nicht gleichmäßig über den Umfang, so dass eine ungleichmäßige Verformung bzw. Kegelaufweitung auftritt. Diese Rundlaufstörung der Aufnahme führt aufgrund der schlechter aneinander anliegenden Kegeloberflächen zu einer verringerten Kraftübertragungsfähigkeit am Spannkegel und damit zu einer Minderung des reibschlüssig übertragbaren Drehmoments. Unter Last, d.h., wenn eine Torsionsbelastung an den außenumfangsseitig angebrachten Mitnehmersteinen angelegt wird, werden die Spannungsspitzen weiter verstärkt. Es kommt zu einer Überlagerung der Spannungsfelder der Kraftübertragungsbereiche Wellen-Naben-Verbindung/ Mitnehmersteine, so dass die Kupplung mit ansteigender Last vorzeitig versagt.

Die Ausführungsform der Kupplung nach Anspruch 8 behebt diese vorstehend genannten Probleme durch die Anwendung des Prinzips der Erfindung, der Trennung der Kraftübertragungsbereiche, auf eine Kupplung mit außermittigen Mitnehmersteinen. Die Trennung der Kraftübertragungsbereiche Wellen-Naben-Verbindung/ Mitnehmersteine führt dazu, dass die Kegelaufweitung (bzw. die Radialvorspannung) gleichmäßig über den Umfang des Spannkegels bzw. des Welle-Nabe-Presssitzes erfolgt; die Kerbwirkung der Mitnehmersteinnuten entfällt. Eine Spannungsüberlagerung unter Last kann vermieden werden.

Der bisherige Versagensfall einer herkömmlichen Spannkegel-Kupplung mit Mitnehmersteinen infolge Kegelübermaß (Reibschluss) und äußerer Torsionsbelastung durch die Mitnehmersteine (Formschluss) wird somit wirksam verhindert. Insgesamt ergibt sich also im Falle einer Spannkegelverbindung im Bereich der Kegelverbindung, ansonsten im Bereich des Wellen-Naben-Sitzes aufgrund der gleichmäßigen Radialverformung eine vergrößerte Kontaktfläche und damit eine verbesserte Torsionsbelastbarkeit.

Vorteilhaft erfolgt die Trennung der Kraftübertragungsbereiche Wellen-Naben-Verbindung/ Mitnehmersteine gemäß Anspruch 9 dadurch, dass die Mitnehmersteine einstückig mit einem der beiden Kupplungsabschnitte vorgesehen sind. Auf diese Weise gelingt es, die bei herkömmlichen Kupplungen mit Mitnehmersteinen auftretende Kerbwirkung der zum Einschrauben der Mitnehmersteine vorgesehenen Nuten und deren negativen Einfluss auf das Spannungsfeld des Welle-Nabe-Sitzes und damit auf die Kegelaufweitung zu vermeiden. Ein zusätzlich zum Spannungsfeld infolge Kegelaufweitung auftretendes Spannungsfeld infolge anliegender äußerer Last liegt somit nicht mehr im Bereich des Kegels/ der Welle-Nabe-Verbindung am Außenumfang der Aufnahme an.

Allerdings tritt unter Last auch am Fuß der Mitnehmersteine, d.h. da, wo die Mitnehmersteine aus dem entsprechenden Kupplungsabschnitt hervortreten, eine Kerbwirkung auf, so dass das durch die Mitnehmersteine verursachte Spannungsfeld mit dem der Kegelaufweitung in diesem Bereich überlagert. Gemäß Anspruch 10 sind daher die Mitnehmersteine vom Welle-Nabe-Sitz axial beabstandet, um auf vorteilhafte Weise einen negativen Einflussung auf die Kraftübertragung am Welle-Nabe-Sitz zu vermeiden.

Bevorzugt sind die Mitnehmersteine am weiblichen Kupplungsabschnitt vorgesehen, am männlichen Kupplungsabschnitt die dafür passenden Nuten, so dass eine Kerbwirkung durch die zur Aufnahme der Mitnehmersteine vorgesehenen Nuten entfällt. Es gelingt somit eine vollständige Trennung der Kraftübertragungsbereiche Welle-Nahe-Verbindung/ Mitnehmersteine; eine Spannungsüberlagerung findet nicht statt und die Kegelaufweitung erfolgt gleichförmig über den Umfang und in axialer Richtung. Daraus resultiert eine erhebliche Erhöhung des übertragbaren Drehmoments, da erst bei Überwindung des maximalen Reibmoments die Mitnehmersteine belastet werden.

Um das mit der Kupplung übertragbare Torsionsmoment weiter zu maximieren, sind in der bevorzugten Ausführungsform neben dem Spannkegel sowohl Mitnehmersteine als auch aneinander anliegende Planflächen vorgesehen. Dabei sind die beiden Kraftübertragungsbereichen Mitnehmersteine/ Planflächen axial vom Spannkegel beabstandet, so dass die Vorspannung des Kegels und die daraus resultierende Kegelaufweitung unbeeinflusst von den Spannungsfeldern der Mitnehmersteine und des Planflächen-Stumpfstoßes gleichmäßig über den Umfang und in axialer Richtung erfolgt.

Wenn die axiale Beabstandung durch eine Ausnehmung in der Aufnahme des weiblichen Kupplungsabschnitts erfolgt, an dem auch die Mitnehmersteine angeordnet sind, kommt es zu einem weiteren, die Leistungsfähigkeit der Kupplung steigernden Effekt:

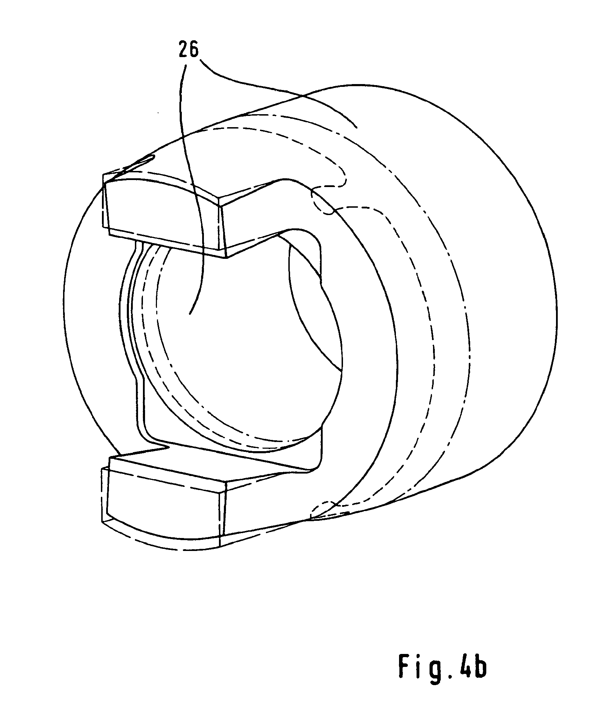

Da die Ausnehmungen die schwächsten Stellen des Kupplungsabschnitts sind, werden sie in Reaktion auf die Kegelaufweitung am Spannkegel nach innen auf Zug belastet. Infolgedessen werden die Mitnehmersteine nach innen gezogen (vgl. Fig. 4b) und legen sich gut an die Nuten des gegenseitigen Kupplungsabschnitts an. Die Kraftübertragung an den Mitnehmersteinen erfolgt somit nicht nur formschlüssig an den radialen Oberflächen der Mitnehmersteine, sondern auch reibschlüssig an ihren Innenumfangsoberflächen. Zusätzlich erhöht sich die Steifigkeit der Kupplung in vorteilhafter Weise sowohl in axialer als auch in radialer Richtung.

Die reibschlüssige Kraftübertragung an den Innenumfangsoberflächen erfolgt dabei verstärkt am axialen Ende der Mitnehmersteine und verringert sich in Richtung auf die Aufnahme zu. Der Kraftübertragungsbereich der aneinander anliegenden Flächen ist also vom Kraftübertragungsbereich des Reibschlusses der Mitnehmersteine getrennt. Dadurch tritt nur eine geringe Verwölbung der Planfläche an der Aufnahme ein. Ein durch die Mitnehmersteine verursachter Verwölbungseffekt nach Art einer Tellerfeder an der Planfläche des weiblichen Kupplungsabschnitts kann so wirksam unterdrückt werden und ein guter Planlauf gewährleistet werden.

Um eine noch stärkere Trennung des Kraftübertragungsbereiches des Stumpfstoßes an den aneinander anliegenden Planflächen und des Formschlusses/Reibschlusses an den Mitnehmersteinen herbeizuführen und den Einfluss der Kerbwirkung am Kerbgrund der Mitnehmersteine auf die Planlaufgenauigkeit des Planflächen-Stumpfstoßes zu verringern, kommt neben einem fliessenden Materialübergang als zusätzliche Maßnahme noch eine Aussparung der Planfläche am weiblichen Kupplungsabschnitt in Betracht. Die Aussparung kann in Form eines Freistichs mit sanftem Durchmesserübergang oder einer Planabfräsung der aufnahmeseitigen Planfläche im Bereich der Mitnehmersteine erfolgen:

Durch Planabfräsung im von den Mitnehmersteinen aus radial innen liegenden Bereich werden die Spannungsspitzen aufgrund des Reibschlusses der Mitnehmersteine aus der Ebene der Planfläche in die Aufnahme hinein verlagert. Durch entsprechend langgezogene Freistiche mit fließenden Durchmesserübergängen im Bereich der Kerbgründe unterhalb der radialen Seitenoberflächen der Mitnehmersteine wird die Kerbwirkung aufgrund des Formschlusses der Mitnehmersteine aus der Ebene der Planflächen in die Aufnahme hinein verlagert. Somit kann das Planlaufverhalten der Planflächen weiter optimiert werden und eine Spannungsüberlagerung in den Kerbgründen, die zu einer vorzeitigen Materialermüdung führen würde, vermieden werden.

Die Erfindung ist aber nicht auf die genannten Ausführungsformen beschränkt, insbesondere ist es möglich eine beliebig große Anzahl von Mitnehmersteinen vorzusehen, oder die Kupplungsabschnitte jeweils für nach inund ausländischen Normen ausgeführte Gegenstücke anzupassen.

Die einzelnen Merkmale der Ausführungsformen gemäss den Ansprüchen lassen sich, soweit es sinnvoll erscheint, beliebig kombinieren.

Nachfolgend werden anhand schematischer Zeichnungen bevorzugte Ausführungsformen der Erfindung näher erläutert. Es zeigen:
Fig. 1a eine frontalperspektivische Ansicht eines männlichen Kupplungsabschnitts in einer bevorzugten Ausführungsform;
Fig. 1b eine Vorderansicht des Kupplungsabschnitts aus Fig. 1a;
Fig. 1c eine seitliche Querschnittsansicht Kupplungsabschnitts aus Fig. 1b, aufgenommen entlang der Schnittlinie B-B;
Fig. 1d eine Seitenansicht des in den der Figuren 1a, 1b, 1c gezeigten Kupplungsteils;
Fig. 2a eine frontalperspektivische Ansicht eines weiblichen Kupplungsabschnitts in einer bevorzugten Ausführungsform;
Fig. 2b eine Vorderansicht des Kupplungsabschnitts aus Fig. 2a;
Fig. 2c eine seitliche Querschnittsansicht Kupplungsabschnitts aus Fig. 2b, aufgenommen entlang der Schnittlinie B-B;
Fig. 2d eine Seitenansicht des in den der Figuren 2a, 2b, 2c gezeigten Kupplungsteils;
Fig. 3a eine frontalperspektivische Ansicht zweier zusammengefügter Kupplungsabschnitte in den bevorzugten Ausführungsformen der Figuren 1 und 2;
Fig. 3b eine Vorderansicht der Kupplung aus Fig. 3a;
Fig. 3c eine seitliche Querschnittsansicht der Kupplung aus Fig. 3b, aufgenommen entlang der Schnittlinie A-A;
Fig. 3d eine Seitenansicht der in den der Figuren 3a, 3b, 3c gezeigten Kupplung;
Fig. 4a ein Diagramm, das quantitativ die Aufteilung der Belastung auf die einzelnen Kraftübertragungsbereiche bei einer in den Figuren 3 gezeigten Kupplung darstellt;
Fig. 4b eine frontalperspektivische Ansicht des weiblichen Kupplungsteils aus den Fig. 2 mit Darstellung der FEM-simulierten Spannungsverteilung des Spannungsfeldes der Welle-Nabe-Verbindung;
Fig. 4c eine Vorderansicht des weiblichen Kupplungsteils aus den Fig. 2 mit Darstellung der FEM-simulierten Spannungsverteilung des Spannungsfeldes des Stumpfstoßes der aneinander anliegenden Planflächen;
Fig. 4d eine frontalperspektivische Ansicht des weiblichen Kupplungsteils aus den Fig. 2 mit Darstellung der FEM-simulierten Spannungsverteilung des Spannungsfeldes eines der Mitnehmersteine;
Fig. 5a eine frontalperspektivische Ansicht eines männlichen Kupplungsabschnitts in einer abgewandelten Ausführungsform;
Fig. 5b eine Vorderansicht des Kupplungsabschnitts aus Fig. 5a;
Fig. 5c eine seitliche Querschnittsansicht Kupplungsabschnitts aus Fig. 5b, aufgenommen entlang der Schnittlinie A-A;
Fig. 5d eine Seitenansicht des in den der Figuren 5a, 5b, 5c gezeigten Kupplungsteils;
Fig. 6a eine frontalperspektivische Ansicht eines weiblichen Kupplungsabschnitts in einer auf in den Figuren 5 gezeigten männlichen Kupplungsabschnitt passenden Ausführungsform;
Fig. 6b eine Vorderansicht des Kupplungsabschnitts aus Fig. 6a;
Fig. 6c eine seitliche Querschnittsansicht Kupplungsabschnitts aus Fig. 6b, aufgenommen entlang der Schnittlinie A-A;
Fig. 6d eine Seitenansicht des in den der Figuren 6a, 6b, 6c gezeigten Kupplungsteils;
Fig. 7a eine Vorderansicht zweier zusammengefügter Kupplungsabschnitte in den Ausführungsformen der Figuren 5 und 6;
Fig. 7b eine seitliche Querschnittsansicht der Kupplung aus Fig. 7a, aufgenommen entlang der Schnittlinie A-A;
Fig. 8a eine frontalperspektivische Ansicht eines männlichen Kupplungsabschnitts in einer weiteren Ausführungsform;
Fig. 8b eine Vorderansicht des Kupplungsabschnitts aus Fig. 8a;
Fig. 8c eine seitliche Querschnittsansicht Kupplungsabschnitts aus Fig. 8b, aufgenommen entlang der Schnittlinie A-A;
Fig. 8d eine Seitenansicht des in den der Figuren 8a, 8b, 8c gezeigten Kupplungsteils;
Fig. 9a eine frontalperspektivische Ansicht eines weiblichen Kupplungsabschnitts in einer auf in den Figuren 8 gezeigten männlichen Kupplungsabschnitt passenden Ausführungsform;
Fig. 9b eine Vorderansicht des Kupplungsabschnitts aus Fig. 9a;
Fig. 9c eine seitliche Querschnittsansicht Kupplungsabschnitts aus Fig. 9b, aufgenommen entlang der Schnittlinie A-A;
Fig. 9d eine Seitenansicht des in den der Figuren 9a, 9b, 9c gezeigten Kupplungsteils;
Fig. 10a eine Vorderansicht zweier zusammengefügter Kupplungsabschnitte in den Ausführungsformen der Figuren 8 und 9;
Fig. 10b eine seitliche Querschnittsansicht der Kupplung aus Fig. 10a, aufgenommen entlang der Schnittlinie A-A;
Fig. 11 eine Vorderansicht einer weiteren Ausführungsform eines weiblichen Kupplungsabschnitts mit einer Aufnahme mit Polygonprofil;
Fig. 12 eine Seitenansicht einer weiteren Ausführungsform eines männlichen Kupplungsabschnitts;
Fig. 13 eine seitliche Querschnittansicht einer zusammengefügten Kupplung mit einem männlichen Kupplungsabschnitt in der in Fig. 12 gezeigten Ausführungsform und einem weiblichen Kupplungsabschnitt in der in den Figuren 9 gezeigten Ausführungsform.

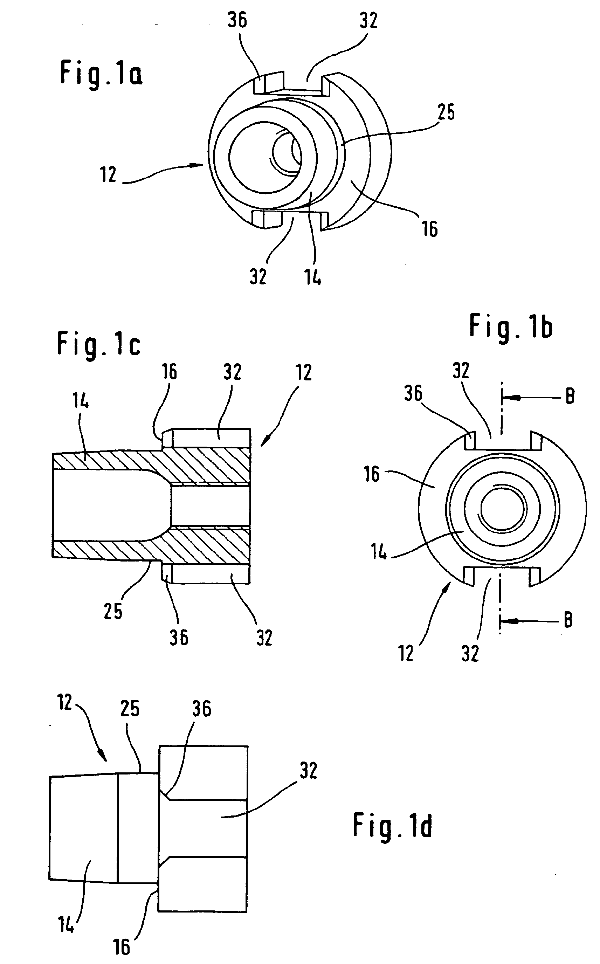

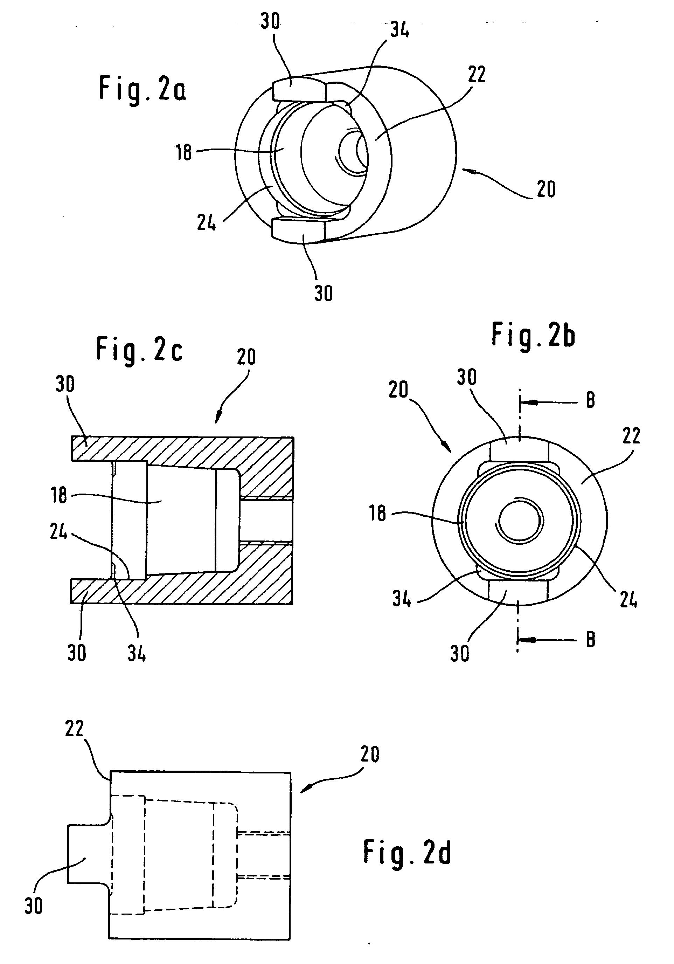

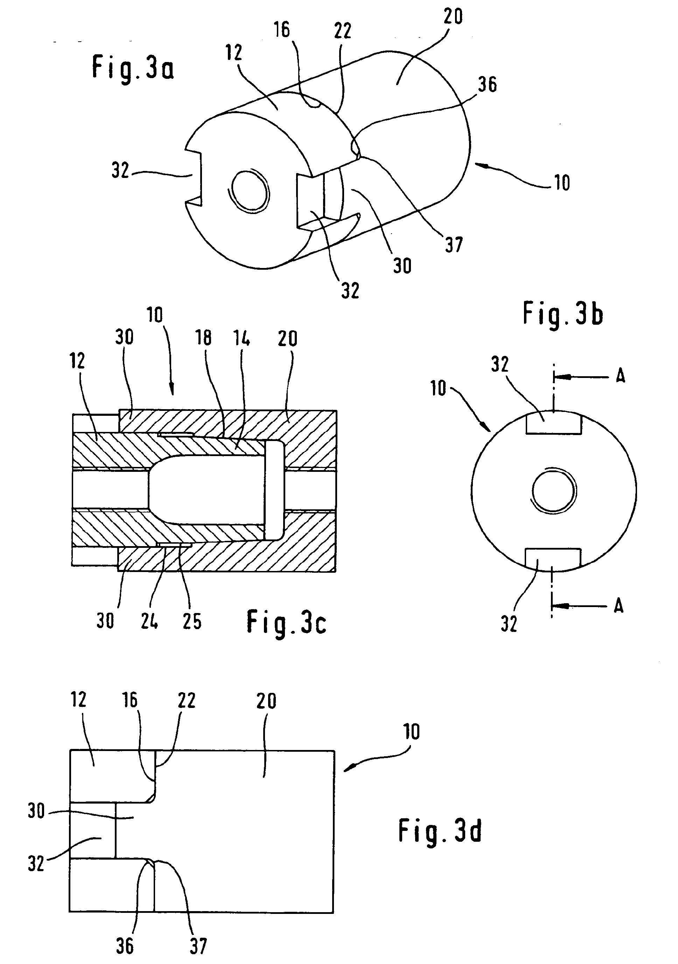

Zunächst wird unter Bezugnahme auf die Figuren 1 -3 eine bevorzugte Ausführungsform der Erfindung erläutert. Die Figuren 1 zeigen einen männlichen Kupplungsabschnitt 12; die Figuren 2 einen weiblichen Kupplungsabschnitt 20 und die Figuren 3 die aus den beiden Abschnitten 12, 20 zusammengesteckte Kupplung 10.

Der männliche Kupplungsabschnitt 12 weist einen Zapfen 14, der weibliche Kupplungsabschnitt 20 eine Aufnahme 18 zur Herstellung des Kegelpressitzes 14, 18 auf. Den Figuren 1 können die Nuten 32 zur Aufnahme der Mitnehmersteine 30 entnommen werden, welche wiederum in den Figuren 2 gezeigt sind. In den Figuren zwei ist ausserdem eine mit 24 bezeichnete Ausdrehung gezeigt, durch die der Innenkegel von der Plananschlagfläche 22 und den Mitnehmersteinen 32 beabstandet ist. Auf der Gegenseite liegt am männlichen Kupplungsabschnitt die Abdrehung 25, durch den der Kegel 14 von der Planfläche 16 und den Mitnehmersteinnuten 32 beabstandet ist.

Wie in der Figur 3c gezeigt, bilden die Ausdrehung 24 und die Abdrehung 25 die Trennung des Kraftübertragungsbereiches Kegelpresssitz 14, 18 vom Kraftübertragungsbereich Stumpfstoß der Planflächen 16, 22 und dem Kraftübertragungsbereich an den Mitnehmersteinen 30, die in Eingriff mit den Mitnehmersteinnuten 32 stehen. Als geeigneter Wert für den Abstand 24, 25 zwischen Planflächen 16, 22 und Welle-Nabe-Sitz 14, 18 hat sich dabei eine Dimensionierung von 0 - 1 mal dem Nenndurchmesser der Kupplung erwiesen. Beispielsweise wird bei einem Nenndurchmesser Ø60mm der Kupplung bevorzugt ein Wert von 14mm für den Abstand 24, 25 gewählt.

Zusätzlich weist das weibliche Kupplungsteil eine Abfräsung 34 auf, die den Kerbgrund der Mitnehmersteine 30 unterhalb ihrer radial innenliegenden Oberfläche aus der Ebene der Planfläche 22 weiter in die Aufnahme 18 hinein verlegt. An den radialen Seitenoberflächen der Mitnehmersteine 30 ist ein abgerundeter Materialübergang 37 zur Planfläche 22 hin vorgesehen (vgl. Figuren 3a, 3d). Auf der Gegenseite weisen die Mitnehmersteinnuten 32 an der Planfläche 16 Abfasungen 36 auf (vgl. Figuren 1, 3a, 3d). Diese Maßnahmen vermindern nicht nur die Kerbwirkung der Mitnehmersteine 30 im Kraftübertragungsbereich aneinander anliegende Planflächen 16, 22, sondern bilden auch Aussparung 36, 37 der Anlagefläche der radialen Seitenoberflächen der Mitnehmersteine 30 an den radialen Seitenoberflächen der Mitnehmersteinnuten 32. Es wird also eine Trennung 34, 36, 37 der Kraftübertragungsbereiche Mitnehmersteine/Planflächen bewirkt. Einerseits wird das Spannungsfeld im radial innenliegenden Kerbgrund der Mitnehmersteine 30 aus der Ebene der Planfläche 22 verlagert, andererseits die Kerbwirkung am radial seitlichen Kerbgrund durch abgerundeteten Materialübergang gemildert. Zusätzlich sorgt die Aussparung des Sitzes der Mitnehmersteine 30 in den Mitnehmersteinnuten 32 im Bereich der Planflächen auch in diesem Bereich für eine Entkopplung der Kraftübertragungsbereiche, so dass sich die auftretenden Spannungsfelder nicht oder nur wenig überlagern.

Den Figuren 1 bis 3 ist auch eine zentrale Axialbohrung zu entnehmen, durch die eine Differentialschraube zum Vorspannen des Kegelpresssitzes geführt werden kann.

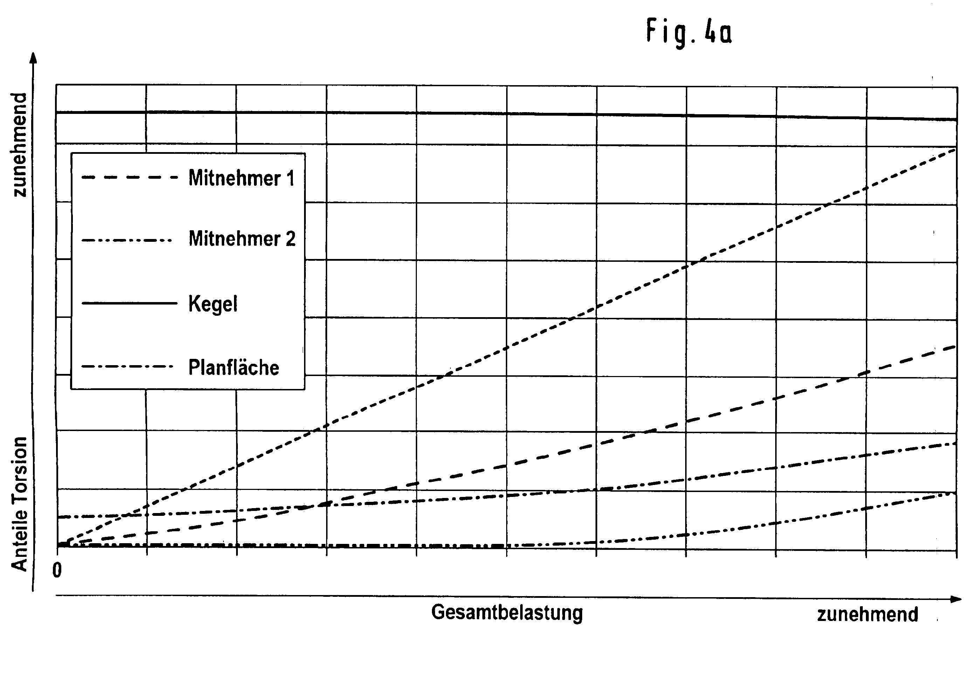

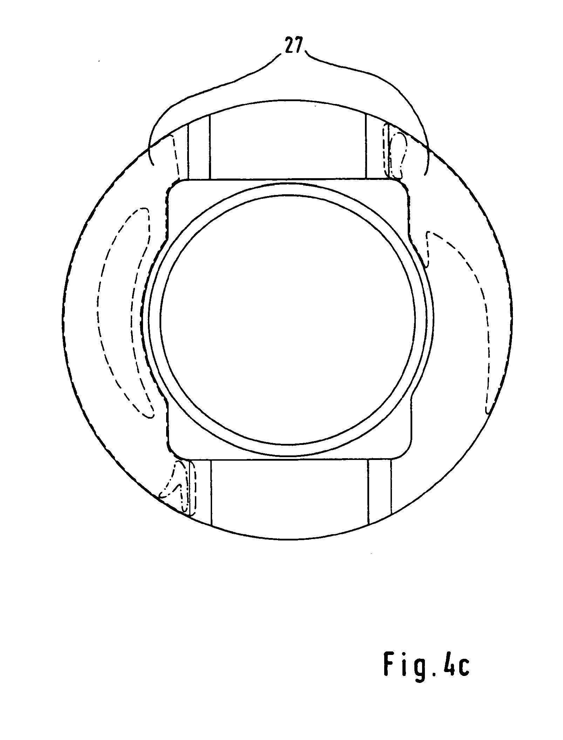

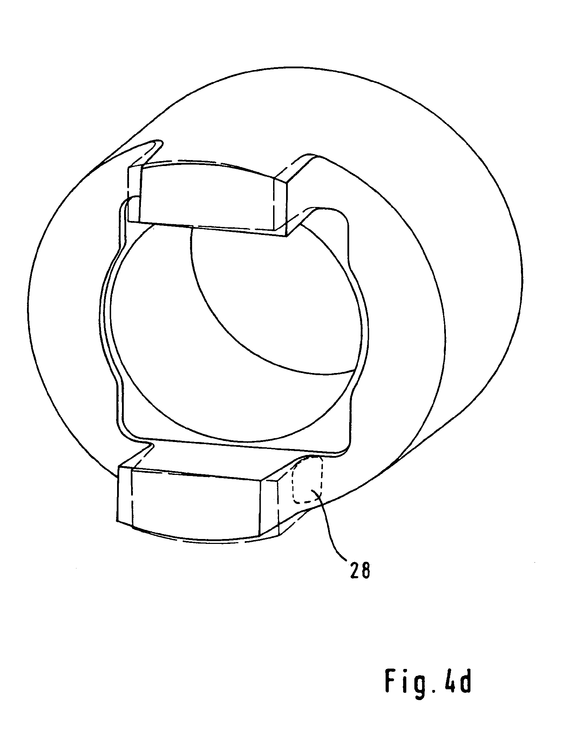

Umfangreiche FEM-Simulationen (Finite Elemente Methode) haben dabei ergeben, dass die Kraftübertragung an den Planlaufflächen 16, 22 und an den Mitnehmersteinen 30 erst nach und nach mit ansteigender Gesamtbelastung auf das Werkzeug einsetzt. Das Ergebnis der Simulation kann quantitativ den Fig. 4 entnommen werden.

Fig. 4a zeigt die Aufteilung des übertragenenen Torsionsmoments auf die verschiedenen Kraftübertragungsbereiche: Die Torsionsbelastung an den Planflächen 16, 22 ist dabei als kurz-lang-gestrichelte Linie eingezeichnet, die Torsionsbelastung am ersten Mitnehmerstein 32 als gestrichelte Linie mit langen Strichen, am zweiten Mitnehmerstein 32 als zweimal kurz, einmal lang gestrichelte Linie. Die über den gesamten Lastbereich konstante Torsionsübertragung am Kegel 14, 18, die seiner Vorspannung entspricht, ist mit durchgezogener Linie dargestellt. Als Vergleichswert ist als gestrichelte Linie mit kurzen Strichen die erzielbare Torsionsübertragung bei einem Mitnehmer eines herkömmlichen Mitnehmerrings mit mit zwei Mitnehmern (DIN-Ring mit zwei Mitnehmern) dargestellt.

Der vergleichbar dimensionierte DIN-Ring kann hingegen nur jeweils an jedem Mitnehmerstein ein Torsionsmoment übertragen. Es zeigte sich, dass zur Übertragung eines gleichen Gesamttorsionsmoments die Mitnehmersteine des DIN-Rings ungleich stärker belastet werden als die Mitnehmersteine bei der erfindungsgemäßen Kupplung, wobei die Torsionsaufnahme am Spannkegel konstant bleibt und so gegen Überlast geschützt ist. Die vorgestellte Kupplung kann deshalb auch wesentlich höheren Gesamtlasten standhalten als Kupplungen mit herkömmlichen DIN-Ringen; d.h. durch die Kupplung der vorliegenden bevorzugten Ausführungsform werden Torsionsmomente übertragen, die die bisher ertragbare Grenztorsionsbelastung übersteigen.

Während die Vorspannung des Kegels 14, 18 auch bei unbelasteter Kupplung 10 auftritt, setzt die Kraftübertragung am durch die aneinander anliegenden Planflächen 16, 22 gebildeten Stumpfstoß und an den Mitnehmersteinen erst mit ansteigender Last ein. Im unbelasteten Fall herrscht nur Reibschluss (am Kegel), mit ansteigender Last setzt nach und nach zusätzlicher Formschluss am ersten Mitnehmerstein ein, bei weiter ansteigenden Belastung auch am zweiten Mitnehmerstein.

Die Figuren 4b, 4c und 4d zeigen jeweils die in der Simulation berechneten Spannungsfelder 26, 27, 28 am Spannkegel 14, 18 (bei unbelasteter Kupplung), der Flächenpressung 16, 22 und an dem höherbelasteten Mitnehmerstein/ Mitnehmersteinnut 30, 32. Drehrichtung ist im Gegenuhrzeigersinn. In Fig. 4b ist dabei am radialen Innenumfang mit gestrichelter Linie eingezeichnet ein bestimmmtes Spannungspotential eingezeichnet. Durch die strichpunktierte Linie ist ein zweites, höheres Spannungspotential eingezeichnet. In Richtung auf die Mitnehmersteine und der Planfläche zu fällt die durch die Kegelpressung verursachte Spannung also ab, bis sie an der gestrichelten Linie einen Grenzwert unterschreitet. Es ist deutlich zu erkennen, dass diese gestrichelte Grenzlinie größtenteils von den Mitnehmersteinen und der Planfläche beabstandet verläuft.

Fig. 4c zeigt das Simulationsergebnis der Spannungsverteilung an der Planfläche. Die mit 27 bezeichneten, gestrichelt umrandeten Bereiche hoher Spannung bilden das Spannungsfeld am Stumpfstoß der Planflächen. Man erkennt, dass dieses Spannungsfeld vom Spannungsfeld 28 im Kerbgrund des höher belasteten Mitnehmersteins (siehe Fig. 4d) auf der in Drehrichtung gelegenen Seite entfernt liegen.

Die der Fig. 4d zu entnehmende Belastung 28 am Kerbgrund (am Ansatz der Mitnehmersteine), die zu einer Materialermüdung führen könnte, wird also klein gehalten und hat aufgrund des axialen Abstands keine oder zumindest nur geringe Auswirkungen auf die Spannungsverteilung 26 an der Kegelpressung (Fig. 4b). Allerdings ist in der Fig. 4c eine hohe Rückwirkung der Mitnehmersteine auf die Flächenpressung im Bereich der nicht in Drehrichtung liegenden Kerbgründe sichtbar (helle, durch strichpunktierte Linien eingeschlossenen Bereiche).

In Fig. 4b ist außerdem sichtbar, dass die Mitnehmersteine durch die Radialspannung am Spannkegel nach innen gezogen werden, da der Kegel durch die Pressverbindung aufgeweitet wird.

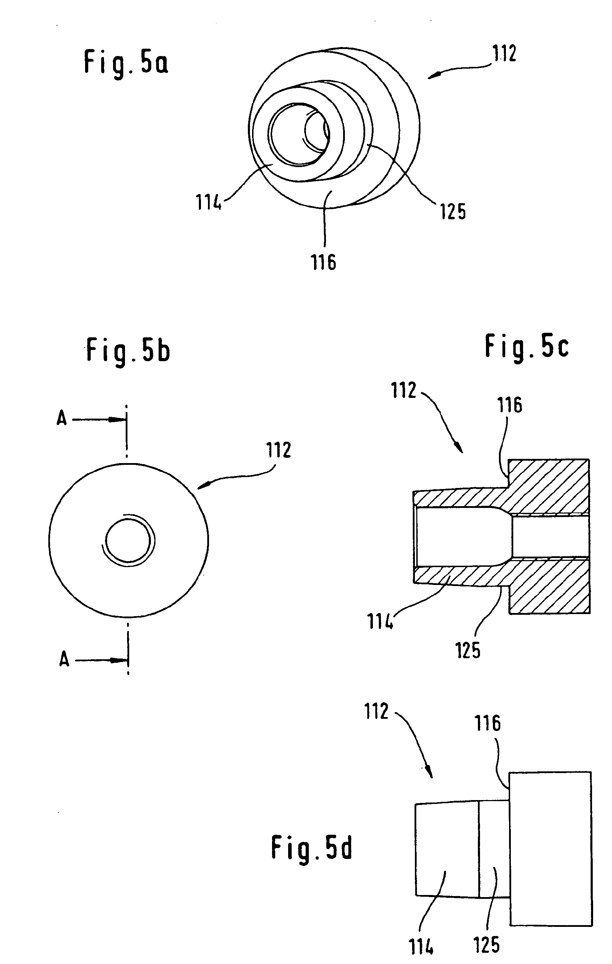

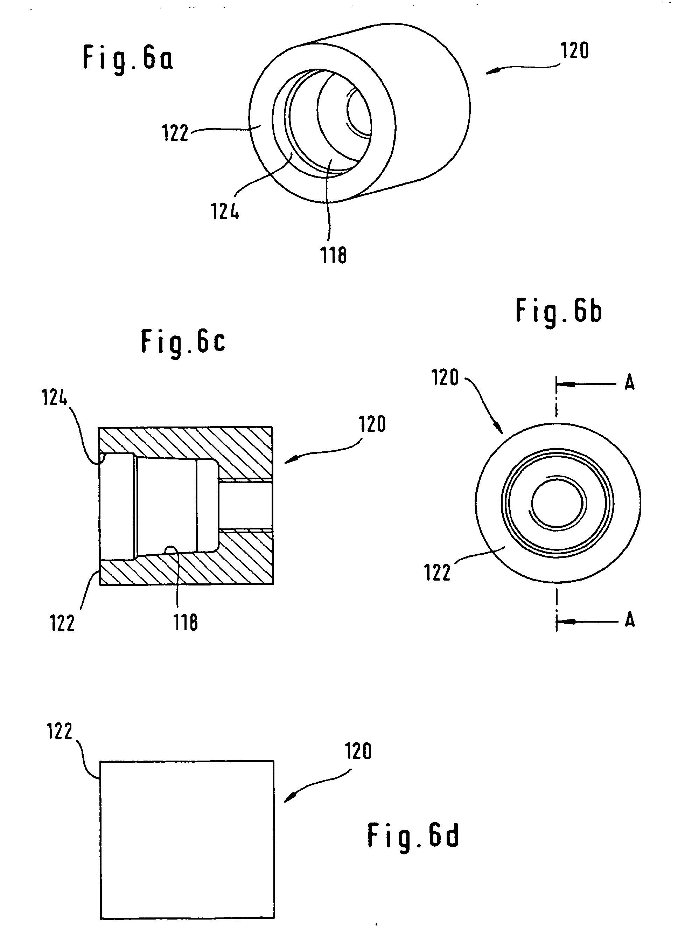

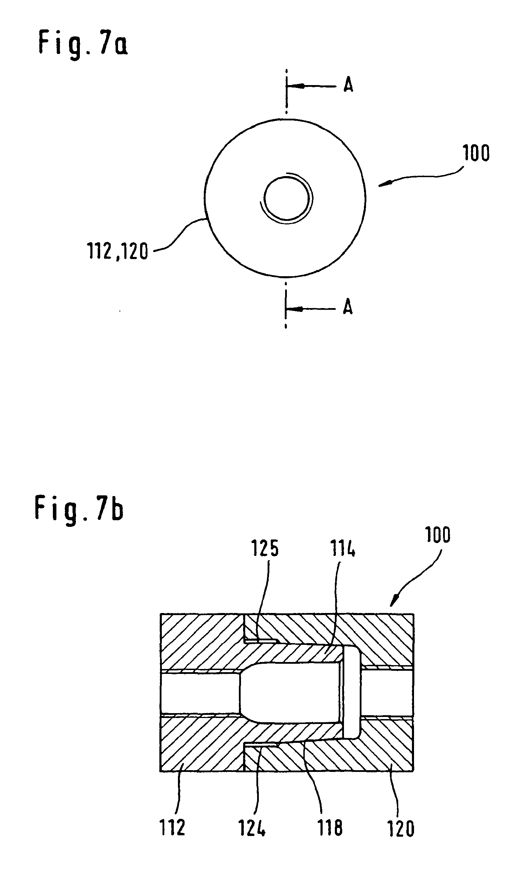

In den Figuren 5 - 7 ist eine weiter Bevorzugte Ausführungsform der vorliegenden Erfindung dargestellt, bei der keine Mitnehmersteine vorgesehen sind, sondern nur die beiden Kraftübertragungsbereiche Welle-Nabe-Verbindung und aneinander anliegende Planflächen. Die Figuren 5 zeigen den männlichen Kupplungsabschnitt 112, die Figuren 6 den weiblichen Kupplungsabschnitt 120 und die Figuren 7 die aus den beiden Abschnitten 112, 120 zusammengesteckte Kupplung 100.

Die Welle-Nabe-Verbindung ist dabei als Spannkegel 114 und entsprechende Aufnahme 118 ausgeführt. Zwischen Planfläche 122 und dem Innenkegel der Aufnahme 118 befindet sich eine Ausdrehung 124 (Figuren 6), zwischen der Planfläche 116 und dem Kegelzapfen 114 befindet sich eine entsprechende Abdrehung 125 (Figuren 5). Insgesamt ergibt sich somit bei der zusammengesteckten Kupplung 100 durch die Aussparung 124, 125 des Welle-Nabe-Sitzes eine Trennung bzw. Entkopplung des Kraftübertragungsbereiches am Spannkegel 114 in der Aufnahme 118 und an den aneinander anliegenden Planflächen 114, 118. Auch hier ist eine zentrale Axialbohrung vorgesehen, durch die eine Schraube zum Vorspannen des Kegelsitzes geführt werden kann.

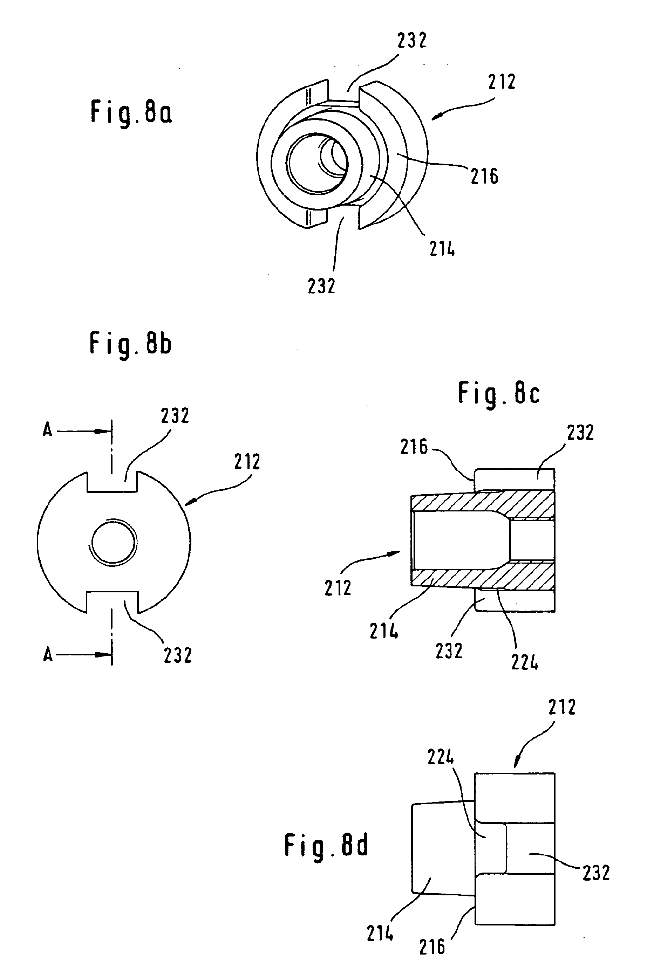

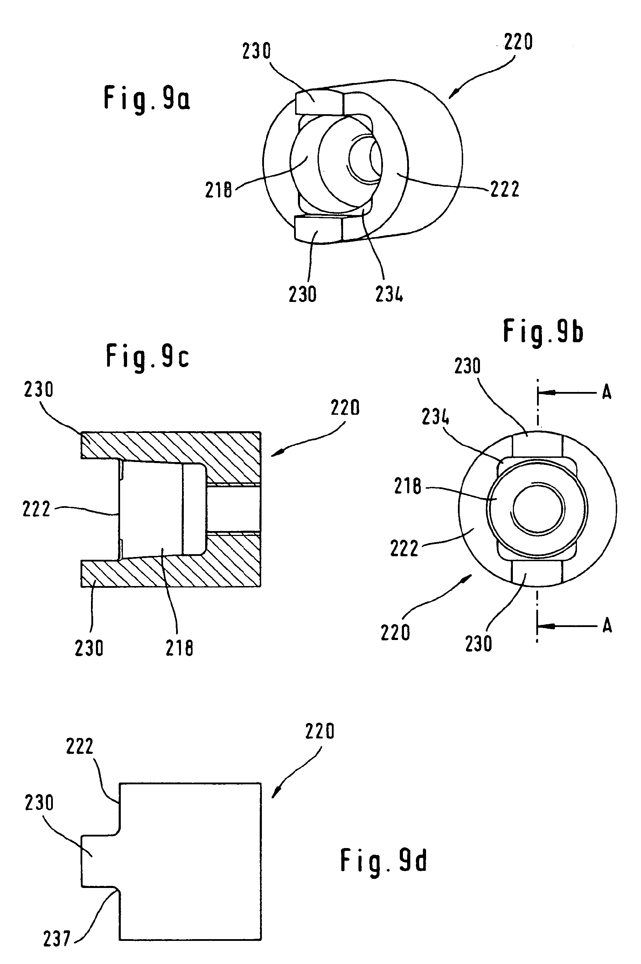

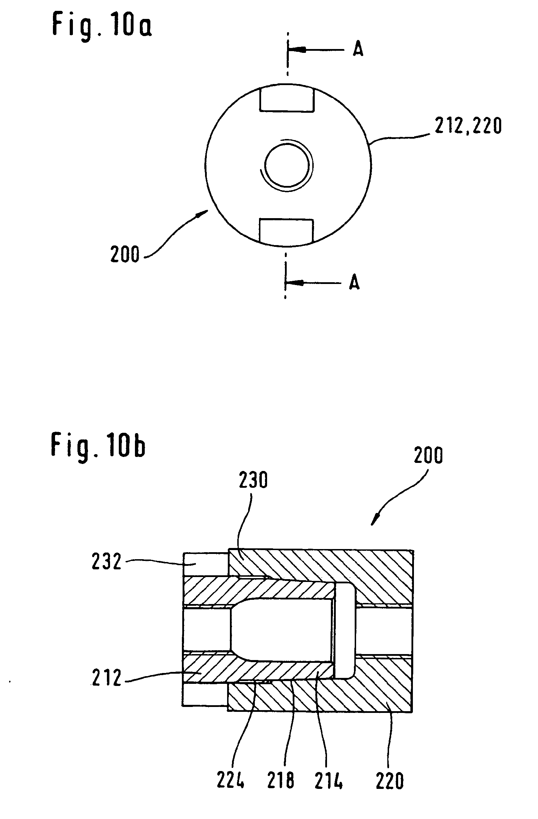

Die Figuren 8 - 10 zeigen eine abgewandelte Ausführungsform der Erfindung. Das männliche Kupplungsbauteil 212 ist in den Figuren 8 gezeigt, das weibliche Kupplungsbauteil 220 in den Figuren 9 und die zusammengesteckte Kupplung 200 in den Figuren 10.

Dabei weist das weibliche Bauteil 220 eine kegelige Aufnahme 218 für den Zapfen 214 des männlichen Bauteil 212 auf. An die Aufnahme schließt direkt eine Planfläche 222 an, die im zusammengesteckten Zustand der Kupplung an der gegenüberliegenden Planfläche 216 (siehe Figs. 8a, 8b) anliegt. Aus der Planfläche 222 des weiblichen Kupplungsbauteils 220 treten zwei Mitnehmersteine 230 hervor. Auf der Gegenseite am männlichen Kupplungsbauteil 212 sind entsprechend zwei Mitnehmersteinnuten 232 vorgesehen.

Im Gegensatz zu den bisher besprochenen Ausführungsformen ist bei der vorliegeden abgewandelten Ausführungsform die Trennung der Kraftübertragungsbereiche Spannkegel und Stumpfstoß nicht durch eine Ausdrehung in der Aufnahme vorgesehen, sondern durch einen Planeinstich bzw. eine Hinterschneidung 224 (siehe Figuren 8c, 8d und 10b), die auf dem männlichen Bauteil den Zapfen 214 von der Planfläche 16 trennt. Die Hinterschneidung 224,trennt einen ringförmigen Materialanteil vom zentralen Zapfen 216 auf einer Länge bestimmmten axialen Länge ab. Bei zusammengesetzter Kupplung 200 kann also der Zapfen unter Last auf der gesamten Länge der Hinterschneidung 224 frei verwinden, ohne dass Verwölbungen an den aneinander anliegenden Planflächen 216, 222 auftreten.

Zusätzlich weist das weibliche Kupplungsteil eine Abfräsung 234 auf (Fig. 9b, 9c), die den Kerbgrund der Mitnehmersteine 30 unterhalb ihrer radial innenliegenden Oberfläche aus der Ebene der Planfläche 222 weiter in die Aufnahme 218 hinein verlegt und somit den Kraftübertragungsbereich Mitnehmersteinen 230 und Spannkegel 218 voneinander trennt. An den radialen Seitenoberflächen der Mitnehmersteine 230 ist ein abgerundeter Materialübergang 37 (Fig. 9d). Auf der Gegenseite weisen die Mitnehmersteinnuten 232 entsprechende Abrundungen auf (vgl. Fig. 8d). Diese Maßnahmen vermindern die Kerbwirkung der Mitnehmersteine. Es wird also eine Trennung der Kraftübertragungsbereiche Mitnehmersteine/Hohlschaftkegel bewirkt.

Der Zapfen 212 in der Aufnahme 218 kann im Bereich der Hinterschneidung 224 frei verwinden. Zusätzlich andererseits wird der radial innenliegenden Kerbgrund der Mitnehmersteine 230 einerseits aus der Ebene der Planfläche 222 verlagert, andererseits liegt er vom Umfang der Aufnahme 218 beabstandet. Es ist also auch hier eine Entkopplung der Kraftübertragungsbereiche gegeben, so dass sich die auftretenden Spannungsfelder nicht oder nur wenig überlagern.

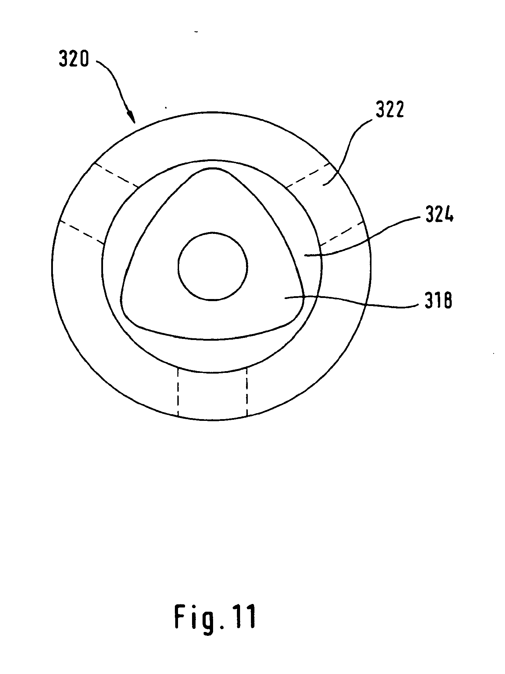

Fig. 11 zeigt ein weibliches Kupplungsbauteil 320 einer weiteren Ausführungsform der Erfindung mit einer polygonförmigen Aufnahme 318 zur Aufnahme eines entsprechenden Zapfen eines Kupplungsgegenstücks. Das Polygonprofil der Aufnahme ist in einem Bereich 324 auf einer Tiefe von 0 - 1 mal dem Nenndurchmesser zwischen der ringförmig verlaufenden Planfläche 322 und der polygonförmigen Aufnahme 318 abgedreht. Auf diese Weise wird bei zusammengesetzter Kupplung der Welle-Nabe-Sitz im Bereich der Planfläche 322 ausgespart, wodurch die beiden Kraftübertragungsbereiche des polygonförmigen Welle-Nabe-Sitzes und des Stumpfstoßes an zwei aneinander anliegenden Planflächen wirksam getrennt sind.

Die Aufnahme weist zwar keine Mitnehmersteine auf. Allerdings wäre auch eine Ausführungsform mit Mitnehmersteinen denkbar, insbesondere in den gestrichelt eingezeichneten Bereichen, an denen das Polygonprofil der Aufnahme am weitesten von der Planfläche radial nach innen zurückweicht, so dass eine Trennung der Kraftübertragungsbereiche Mitnehmersteine und Welle-Nabe-Sitz besonders effektiv verwirklicht werden könnte. Auch die aufgrund des Formschlusses am polygonförmigen Welle-Nabe-Sitz auftretenden Spannungen im Bereich der abgerundeten Ecken des Polygonprofils wären auf diese Weise von den Mitnehmersteinen wegversetzt, so dass es nicht zu einer Überlagerung kommt. Auch ein fließender Materialübergang vom Innendurchmesser der ringförmigen Planfläche zum Außendurchmesser des Polygonprofils hin wäre denkbar.

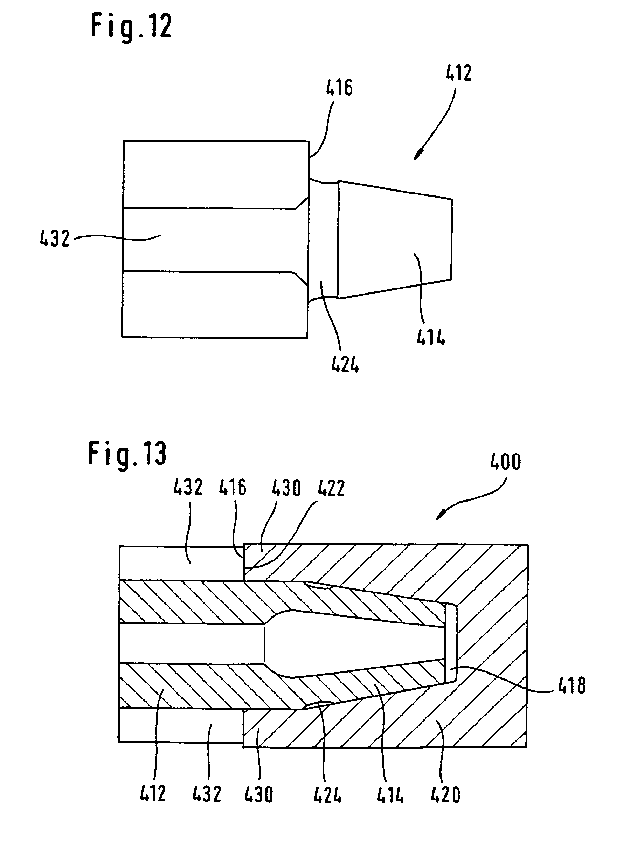

Schliesslich zeigen die Figuren 12 und 13 eine letzte Ausführungsform der Erfindung. In Figur 12 ist ein männlicher Kupplungsabschnitt mit einem Zapfen. 414 dargestellt, wobei sich zwischen dem Zapfen 414 und einer diesen enschließenden Planfläche 416 eine umlaufende Kerbe 424 befindet. Desweiteren ist eine Nut 432 zur Aufnahme eines Mitnehmersteins des Gegenstücks der Kupplung mitm 432 bezeichnet. Fig. 12 zeigt die zusammengesteckte Kupplung dieser Ausführungsform, wobei eine dem Kegelzapfen 414 entsprechende Aufnahme 418 vorgesehen ist, die von einer Planfläche 422 eingefasst wird. Aus der Planfläche 422 ragen Mitnehmersteine 432 heraus. Somit werden drei Kraftübertragungsbereiche gebildet: Spannkegel 414, Stumpfstoß der Planflächen 416, 422 und Formschluss der Mitnehmersteine 430 in den dafür vorgesehenen Nuten 432. Durch die umlaufende Kerbe 424 wird der Welle-Nabe-Sitz am Spannkegel im Bereich der Planflächen 416, 422 ausgespart. Auf diese Weise wird der Kraftübertragungsbereich Spannkegel von den beiden anderen Kraftübertragungsbereichen getrennt. Eine Verwölbung der Planflächen wird ebenso wie eine ungleichmäßige Kegelaufweitung vermieden und die Mitnehmersteine infolge der Radialaufweitung am Spannkegel nach innen gezogen.

Selbstverständlich sind Abweichungen von den gezeigten Varianten möglich, ohne den Grundgedanken der Erfindung zu verlassen.

Insbesondere wäre es denkbar
- eine beliebige Anzahl von Mitnehmersteinen zu verwenden,
- die Welle-Nabe-Verbindung ellipsenförmig auszubilden,
- das Vorspannen nicht durch eine Differentialschraube, sondern durch eine andere geeignete Spannmechanik zu bewerkstelligen, so dass keine zentrale Bohrung für eine solche Schraube vorgesehen sein muss und der Zapfen als Vollwelle ausgebildet sein könnte, wobei als Spannmechanik beispielsweise Radialstifte, die in entsprechende Bohrungen gesteckt werden dienen könnte,
- die Mitnehmersteine/Mitnehmersteinnuten als Passstift/Bohrung auszuführen, die wahlweise auf dem männlichen oder weiblichen Kupplungsteil angeordnet sind,
- die Mitnehmersteine/Mitnehmersteinnuten radial versetzt zu den Planflächen anzuordnen, beispielsweise durch entsprechende Vorsprünge,
- als Mitnehmersteine eine beliebige Anzahl Radialstifte zu verwenden, die nach dem Zusammenstecken der Kupplung von außen in entsprechend vorgesehene Bohrungen gesteckt werden und so den Formschluss zwischen männlichem und weiblichem Kupplungsteil herstellen,
- als Mitnehmersteine Gewindebolzen zu verwenden, die in entsprechend zugängige Bohrungen geschraubt werden (Beispielsweise Radialstifte oder Axialstifte, die durch entsprechende radiale Materialvorsprünge am männlichen und weiblichen Kupplungsabschnitt verlaufen,
- die Belastung im Kerbgrund an den radialen Seitenoberflächen durch entsprechende Freistiche bzw. Abfräsungen in den Planflächen/ Mitnehmersteinoberflächen zu verringern.

Die Erfindung besteht also aus einer Kupplung 10; 100; 200; 400 zum Einsatz zwischen den Modulen eines modular aufgebauten Werkzeughalterarms, insbesondere einer Werkzeugmaschine, mit einem männlichen Kupplungsabschnitt 12; 112; 212; 412, das den Abschluss eines ersten Moduls bildet und einen zentralen, achsensymmetrischen Zapfen 14; 114; 214; 414 aufweist und einem weiblichen Kupplungsabschnitt 20; 120; 220; 320; 420, das den Abschluss eines mit dem ersten Modul zu verbindenden, zweiten Moduls bildet und eine zentrale, achsensymmetrische Aufnahme 18; 118; 218; 318; 418 aufweist. Die beiden Kupplungsabschnitte bilden im eingekuppelten Zustand einen Welle-Nabe-Sitz 14, 18; 114, 118; 214, 218; 414, 418 als einen ersten Kraftübertragungsbereich und zumindest einen weiteren Kraftübertragungsbereich.

Zumindest unter Last ist dabei an dem ersten Kraftübertragungsbereich ein erstes Spannungsfeld 26 ausgebildet und an dem zumindest einen weiteren Kraftübertragungsbereich zumindest ein weiteres Spannungsfeld 27; 28, wobei eine Trennung 24, 25; 124, 125; 224; 324; 424 des ersten Kraftübertragungsbereichs von dem zumindest einen weiteren Kraftübertragungsbereich vorgesehen ist, so dass das jeweilige Spannungsfeld 26; 27; 28 unbeeinflusst durch den/die jeweils anderen Kraftübertragungsbereich(e) ausgebildet ist.

### Bezugszeichenliste

| | |
|---|---|
| Kupplung | 10; 100; 200; 400 |
| | |
| männlicher Kupplungsabschnitt | 12; 112; 212; 412 |
| Zapfen | 14; 114; 214; 414 |
| erste Planfläche | 16; 116; 216; 416 |
| weiblicher Kupplungsabschnitt | 20; 120; 220; 320; 420 |
| Aufnahme | 18; 118; 218; 318; 418 |
| kegelförmige Aufnahme | 18; 118; 218; 418 |
| polygonförmige Aufnahme | 318 |
| zweite Planfläche | 22; 122; 222; 322; 422 |
| | |
| Stumpfstoß an zwei aneinander | 16, 22; 116, |
| anliegenden Plananschlagflächen | 122; 216, 222 |
| Welle-Nabe-Sitz | 14, 18; 114, 118; 214, 218; 414, 418 |
| Trennung des Kraftübertragungsbereichs | 24, 25; 124, |
| Welle-Nabe-Sitz von dem zumindest einen weiteren Kraftübertragungsbereichs (axialer Abstand des Welle-Nabe-Sitzes im Bereich der Plananschlagflächen) | 125; 224; 324; 424 |
| Ausnehmung in der Aufnahme | 24; 124; 324 |
| Abdrehung des Kegels auf dem Zapfen | 25; 125 |
| Ausnehmung (Planeinstich oder Kerbe) am Zapfen | 224; 424 |
| Planeinstich am Zapfen | 224 |
| Kerbe am Zapfen | 424 |
| erstes Spannungsfeld | 26 |
| zweites Spannungsfeld | 27 |
| drittes Spannungsfeld | 28 |
| Mitnehmersteine | 30; 230; 430 |
| Ausnehmungen für die Mitnehmersteine | 32; 232; 432 |
| Planabfräsung der Planfläche | 34, 234 |
| Abfasungen der Mitnehmersteinnuten | 36 |
| abgerundeter Materialübergang | 37, 237 |
| Aussparung der Anlagefläche der radialen Seitenoberflächen der Mitnehmersteine an den radialen Seitenoberflächen der Mitnehmersteinnuten | 36, 37 |
| Trennung der Kraftübertragungsbereiche | 34, 36, 37; |
| Mitnehmersteine/Planflächen | 234, 237 |

## Patentansprüche

1. Kupplung (10; 100; 200; 400) zum Einsatz zwischen den Modulen eines modular aufgebauten Werkzeughalterarms, insbesondere einer Werkzeugmaschine, mit
einem männlichen Kupplungsabschnitt (12; 112; 212; 412), das den Abschluss eines ersten Moduls bildet und einen zentralen, achsensymmetrischen Zapfen (14; 114; 214; 414) aufweist und
einem weiblichen Kupplungsabschnitt (20; 120; 220; 320; 420), das den Abschluss eines mit dem ersten Modul zu verbindenden, zweiten Moduls bildet und eine zentrale, achsensymmetrische Aufnahme (18; 118; 218; 318; 418) aufweist, wobei
die beiden Kupplungsabschnitte im eingekuppelten Zustand eine Verbindung nach Art eines Welle-Nabe-Sitzes (14, 18; 114, 118; 214, 218; 414, 418) als einen ersten Kraftübertragungsbereich ausbilden und aneinander anliegende Planflächen (16, 22; 116, 122; 216, 222; 322; 416, 422) aufweisen, die einen zweiten Kraftübertragungsbereich bilden, wobei
die Kupplung ferner Mitnehmersteine (30; 230; 430) aufweist, die einen dritten Kraftübertragungsbereich ausbilden, und wobei zumindest unter Last
an dem ersten Kraftübertragungsbereich ein erstes Spannungsfeld (26)
an dem zweiten Kraftübertragungsbereich ein zweites Spannungsfeld (27) und
an dem dritten Kraftübertragungsbereich ein drittes Spannungfeld (28) ausgebildet ist,
**gekennzeichnet durch** eine Trennung (34, 36, 37; 234, 237) des zweiten Kraftübertragungsbereichs vom dritten Kraftübertragungsbereich, so dass das jeweilige Spannungsfeld (27; 28) unbeeinflusst **durch** den jeweils anderen Kraftübertragungsbereich ausgebildet ist.

2. Kupplung (10; 100; 200; 400) nach Anspruch 1, ferner **gekennzeichnet durch** eine Trennung (24, 25; 124, 125; 224; 324; 424) des ersten Kraftübertragungsbereichs von dem zweiten Kraftübertragungsbereich, so dass das jeweilige Spannungsfeld (26; 27; 28) unbeeinflusst **durch** die jeweils anderen Kraftübertragungsbereiche ausgebildet ist.

3. Kupplung (10; 100; 200; 400) nach Anspruch 1 oder 2, wobei der Welle-Nabe-Sitz (14, 18; 114, 118; 214, 218; 414, 418) in kegeliger Form, insbesondere nach Vorgabe des HSK-Systems (DIN 69893), ausgebildet ist.

4. Kupplung (10; 100; 200; 400) nach Anspruch 1 oder 2, wobei der Welle-Nabe-Sitz in Polygonform (320) ausgebildet ist.

5. Kupplung (10; 100; 200; 400) nach Anspruch 2, wobei die Trennung (24, 25; 124, 125; 224, 225; 324; 424) des ersten Kraftübertragungsbereichs im Bereich des Welle-Nabe-Sitzes (14, 18; 114, 118; 214, 218; 414, 418) und des zweiten Kraftübertragungsbereichs an den Planflächen (16, 22; 116, 122; 216, 222; 416, 422) durch einen axialen Abstand (24, 25; 124, 125; 224, 225; 324; 424) des Welle-Nabe-Sitzes (14, 18; 114, 118; 214, 218; 414, 418) von den Planflächen (16, 22; 116, 122; 216, 222; 416, 422) vorgesehen ist.

6. Kupplung (10; 100; 200; 400) nach Anspruch 5, wobei der axiale Abstand (24, 25; 124, 125; 224, 225; 324; 424) durch eine Aussparung (24, 25; 124, 125; 224, 225; 324; 424) des Welle-Nabe-Sitzes (14, 18; 114, 118; 214, 218; 414, 418) im Bereich der Planflächen 16, 22; 116, 122; 216, 222; 416, 422) vorgesehen ist.

7. Kupplung (10; 100; 200; 400) nach Anspruch 6, wobei die Aussparung (24, 124; 324) des Welle-Nabe-Sitzes (14, 18; 224, 225) im Bereich der Planlaufflächen durch eine Ausnehmung (24, 124; 324) in der Aufnahme (18; 218; 318) vorgesehen ist.

8. Kupplung (10; 100; 200; 400) nach einem der vorhergehenden Ansprüche, wobei an einem der Kupplungsabschnitte (20; 220; 420) außermittig Mitnehmersteine (30; 230; 430), am anderen Kupplungsabschnitt (12; 212; 412) für die Mitnehmersteine (30; 230; 430) passende Ausnehmungen (32; 232; 432) vorgesehen sind,
so dass die Mitnehmersteine (30; 230; 430) im eingekuppelten Zustand der Kupplung (10; 100; 200; 400) in die für sie passenden Ausnehmungen (32; 232; 432) eingreifen und so einer der zumindest einen weiteren Kraftübertragungsbereiche ausgebildet wird.

9. Kupplung (10; 100; 200; 400) nach Anspruch 8, wobei die Mitnehmersteine (30; 230; 430) einstückig mit einem der beiden Kupplungsabschnitte (20; 220; 420) vorgesehen sind.

10. Kupplung (10; 100; 200; 400) nach Anspruch 8 oder 9, wobei die Mitnehmersteine (30; 230; 430) vom Welle-Nabe-Sitz (14, 18; 214, 218; 414, 418) axial beabstandet sind.

11. Kupplung (10; 100; 200; 400) nach einem der Ansprüche 8 - 10, wobei die Mitnehmersteine (30; 230; 430) am weiblichen Kupplungsabschnitt (20; 120; 220) vorgesehen sind.

12. Einsatzwerkzeug-Trägerstück für einen Werkzeughalterarm einer Werkzeugmaschine, mit einem der beiden Kupplungsabschnitte einer Kupplung nach einem der vorhergehenden Ansprüche, zum Einsetzen in ein entsprechendes Aufnahmestück, das den entsprechenden, anderen Kupplungsabschnitt aufweist.

13. Verlängerungs- bzw. Zwischenstück für einen Werkzeughalterarm einer Werkzeugmaschine, das zumindest auf einer Seite einen der beiden Kupplungsabschnitte der Kupplung nach einem der Ansprüche 1 - 11 aufweist.

14. Grundaufnahmestück für einen Werkzeughalterarm einer Werkzeugmaschine mit einem der beiden Kupplungsabschnitte der Kupplung nach einem der Ansprüche 1 - 11 zur Aufnahme eines Einsatzwerkzeug-Trägerstück gemäß Anspruch 12 oder eines Verlängerungs- bzw. Zwischenstücks gemäß Anspruch 13.

15. Werkzeughalterarm, bestehend aus einem Einsatzwerkzeug-Trägerstück gemäß Anspruch 12, einem Grundaufnahmestück gemäß Anspruch 14 und optional einem Verlängerungs- bzw. Zwischenstück gemäß Anspruch 13.

16. Werkzeugmaschine mit einer Schnittstelle mit einem Kupplungsabschnitt der Kupplung nach einem der Ansprüche 1 - 11, zum Ankoppeln eines Einsatzwerkzeug-Trägerstück gemäß Anspruch 12, eines Verlängerungs- bzw. Zwischenstücks gemäß Anspruch 13, eines Grundaufnahmestücks gemäß Anspruch 14 oder eines Werkzeughalterarms gemäß Anspruch 15.

## Claims

1. A coupling (10; 100; 200; 400) for insertion between the modules of a modularly constructed tool holder arm, in particular a machine tool, comprising
a male coupling section (12; 112; 212; 412) which forms the termination of a first module and comprises a central axysymmetric pin (14; 114; 214; 414) and
a female coupling section (20; 120; 220; 320; 420) which forms the termination of a second module to be connected to said first module and comprises a central axysymmetric receptacle (18; 118; 218; 318; 418), wherein
in the coupled-in state, the two coupling sections form a connection in the form of a shaft-hub seat (13, 18; 114, 118; 214, 218; 414, 418) as a force transmission region and comprise plane faces (16, 22; 116; 122; 216, 222; 322; 416, 422) which abut against one another and form a second force transmission region, wherein
the coupling further comprises driving keys (30; 230; 430) which form a third force transmission region, and wherein at least under load
a first stress field (26) is formed at the first force transmission region
a second stress field (27) is formed at the second force transmission region and
a third stress field (28) is formed at the third force transmission region
**characterised by** a separation (34, 36, 37; 234, 237) of the second force transmission region from the third force transmission region so that the respective stress field (27; 28) is formed without being influenced by the respectively other force transmission region.

2. The coupling (10; 100; 200; 400) according to claim 1, further **characterised by** a separation (24, 25; 124, 125; 224; 324; 424) of the first force transmission region from the second force transmission region so that the respective stress field (26; 27; 28) is formed without being influenced by the respectively other force transmission regions.

3. The coupling (10; 100; 200; 400) according to claim 1 or 2, wherein the shaft-hub seat (14, 18; 114, 118; 214, 218; 414, 418) is formed in a conical form, in particular according to the specification of the HSK system (DIN 69893).

4. The coupling (10; 100; 200; 400) according to claim 1 or 2, wherein the shaft-hub seat is formed in a polygonal form (320).

5. The coupling (10; 100; 200; 400) according to claim 2, wherein the separation (24, 25; 124, 125; 224, 225; 324; 424) of the first force transmission region in the area of the shaft-hub seat (14, 18; 114, 118; 214, 218; 414, 418) and of the second force transmission region at the plane faces (16, 22; 116, 122; 216, 222; 416, 422) is provided by an axial spacing (24, 25; 124, 125; 224, 225; 324; 424) of the shaft-hub seat (14, 18; 114, 118; 214, 218; 414, 418) from the plane faces (16, 22; 116, 122; 216, 222; 416, 422).

6. The coupling (10; 100; 200; 400) according to claim 5, wherein the axial spacing (24, 25; 124, 125; 224, 225; 324; 424) is formed by a recess (24, 25; 124, 125; 224, 225; 324; 424) of the shaft-hub seat (14, 18; 114, 118; 214, 218; 414, 418) in the area of the plane faces (16, 22; 116, 122; 216, 222; 416, 422).

7. The coupling (10; 100; 200; 400) according to claim 6, wherein the recess (24, 124; 324) of the shaft-hub seat (14, 18; 224, 225) in the area of the plane running faces is formed by a recess (24, 124; 324) in the receptacle (18; 218; 318).

8. The coupling (10; 100; 200; 400) according to any one of the preceding claims, wherein driving keys (30; 230; 430) are provided off-centre on one of the coupling sections (20; 220; 420) and suitable recesses (32; 232; 432) for the driving keys (30; 230; 430) are provided on the other coupling section (12; 212; 412),
so that in the coupled-in state of the coupling (10; 100; 200; 400), the driving keys (30; 230; 430) engage in the suitable recesses (32; 232; 432) for said keys and thus one of the at least one further force transmission regions is formed.

9. The coupling (10; 100; 200; 400) according to claim 8, wherein the driving keys (30; 230; 430) are provided in one piece with one of the two coupling sections (20; 220; 420).

10. The coupling (10; 100; 200; 400) according to claim 8 or 9, wherein the driving keys (30; 230; 430) are axially spaced apart from the shaft-hub seat (14, 18; 214, 218; 414, 418).

11. The coupling (10; 100; 200; 400) according to any one of claims 8-10, wherein the driving keys (30; 230; 430) are provided on the female coupling section (20; 120; 220).

12. Insert tool support piece for a tool holder arm of a machine tool comprising one of the two coupling sections of a coupling according to any one of the preceding claims, for insertion in a corresponding receiving piece which comprises the corresponding other coupling section.

13. An extension or intermediate piece for a tool holder arm of a machine tool which comprises at least on one side, one of the two coupling sections of the coupling according to any one of claims 1-11.

14. A base receiving piece for a tool holder arm of a machine tool comprising one of the two coupling sections of the coupling according to one of claims 1-11 for receiving an insert tool support piece according to claim 12 or an extension or intermediate piece according to claim 13.

15. A tool holder arm consisting of an insert tool support piece according to claim 12, a base receiving piece according to claim 14 and optionally an extension or intermediate piece according to claim 13.

16. A machine tool comprising an interface with a coupling section of the coupling according to one of claims 1-11, for coupling-on an insert tool support piece according to claim 12, an extension or intermediate piece according to claim 13, a base receiving piece according to claim 14 or a tool holder arm according to claim 15.

## Revendications

1. Accouplement (10 ; 100 ; 200 ; 400) prévu pour une utilisation entre les modules d'un bras de support d'outil construit de façon modulaire, en particulier d'une machine-outil, avec
une section d'accouplement mâle (12 ; 112 ; 212 ; 412) formant l'extrémité d'un premier module et comportant un pivot central symétrique par rapport à l'axe (14 ; 114 ; 214 ; 414), et
une section d'accouplement femelle (20 ; 120 ; 220 ; 420) formant l'extrémité d'un deuxième module à relier au premier module, et comportant une admission centrale symétrique par rapport à l'axe (18 ; 118 ; 218 ; 418), dans lequel
les deux sections d'accouplement à l'état accouple forment une liaison du genre assise arbre-moyeu (14, 18 ; 114, 118 ; 214, 218 ; 414, 418) en tant que première région de transmission de forces, et comportent des faces planes adjacentes (16, 22 ; 116, 122 ; 216, 222 ; 322 ; 416, 422), formant une deuxième région de transmission de forces, et
l'élément d'accouplement comprenant en outre des clavettes fixes (30 ; 230 ; 430) formant une troisième région de transmission de forces, et dans lequel, au moins avec charge,
un premier champ de contraintes (26) est formé dans la première région de transmission de forces,
un deuxième champ de contraintes (27) est formé dans la deuxième région de transmission de forces, un troisième champ de contraintes (28) est formé dans la troisième région de transmission de forces,
**caractérisé par** une séparation (34, 36, 37 ; 234, 237) entre la deuxième région de transmission de forces et la troisième région de transmission de forces, de façon à ce que chacun des champs de contraintes (27 ; 28) puisse être formé par l'autre des régions de transmission de forces sans être influencé.

2. Accouplement (10 ; 100 ; 200 ; 400) selon la revendication 1, en outre **caractérisé par** une séparation (24, 25 ; 124, 125 ; 224 ; 324 ; 424) entre la première région de transmission de forces et la deuxième région de transmission de forces, de façon à ce que chacun des champs de contraintes (26 ; 27 ; 28) puisse être formé par l'autre des régions de transmission de forces sans être influencé.

3. Accouplement (10 ; 100 ; 200 ; 400) selon la revendication 1 ou 2, l'assise arbre-moyeu (14, 18 ; 114, 118 ; 214, 218 ; 414, 418) ayant une forme conique, entraînement, particulier après la prédéfinition du système HSK (DIN 69893).

4. Accouplement (10 ; 100 ; 200 ; 400) selon la revendication 1 ou 2, l'assise arbre-moyeu ayant une forme polygonale (320).

5. Accouplement (10 ; 100 ; 200 ; 400) selon la revendication 2, dans lequel la séparation (24, 25 ; 124, 125 ; 224, 225 ; 324 ; 424) entre la première région de transmission de forces dans la région de l'assise arbre-moyeu (14, 18 ; 114, 118 ; 214, 218 ; 414, 418) et la deuxième région de transmission de forces sur les faces planes (16, 22 ; 116, 122 ; 216, 222 ; 416, 422) est prévu par un écart axial (24, 25 ; 124, 125 ; 224, 225 ; 324 ; 424) de l'assise arbre-moyeu (14, 18 ; 114, 118 ; 214, 218 ; 414, 418) des faces planes (16, 22 ; 116, 122 ; 216, 222 ; 416, 422).

6. Accouplement (10 ; 100 ; 200 ; 400) selon la revendication 5, dans lequel l'écart axial (24, 25 ; 124, 125 ; 224, 225 ; 324 ; 424) est prévu dans la région des faces planes (16, 22 ; 116, 122 ; 216, 222 ; 416, 422), par un évidement (24, 25 ; 124, 125 ; 224, 225 ; 324 ; 424) dans l'assise arbre-moyeu (14, 18 ; 114, 118 ; 214, 218 ; 414, 418).

7. Accouplement (10 ; 100 ; 200 ; 400) selon la revendication 6, dans lequel l'évidement (24, 124 ; 324) de l'assise arbre-moyeu (14, 18 ; 224, 225) dans la région des faces planes est prévu par une encoche (24, 124 ; 324) dans l'évidement (18 ; 218 ; 318).

8. Accouplement (10 ; 100 ; 200 ; 400) selon l'une des revendications précédentes, dans lequel des clavettes fixes excentrées (30 ; 230 ; 430) sont prévues sur l'une des sections d'accouplement (20 ; 220 ; 420) et des encoches (32 ; 232 ; 432) adaptées aux clavettes fixes (30 ; 230 ; 430) sont prévues sur l'autre section d'accouplement (12 ; 212 ; 412),
de façon à ce que les clavettes fixes (30 ; 230 ; 430), à l'état accouplé de l'accouplement (10 ; 100; 200; 400) s'engagent dans les encoches (32 ; 232; 432) adaptées à cet effet, permettant ainsi de former au moins une autre région de transmission de forces.

9. Accouplement (10 ; 100 ; 200 ; 400) selon la revendication 8, les clavettes fixes (30 ; 230 ; 430) étant prévues en une seule pièce avec l'une des deux sections d'accouplement (20 ; 220 ; 420).

10. Accouplement (10 ; 100 ; 200 ; 400) selon la revendication 8 ou 9, les clavettes fixes (30 ; 230 ; 430) sont axialement espacées de l'assise arbre-moyeu (14, 18 ; 214, 218 ; 414, 418).

11. Accouplement (10 ; 100 ; 200; 400) selon l'une des revendications 8 à 10, les clavettes fixes (30 ; 230 ; 430) étant prévues sur la section d'accouplement femelle (20 ; 120 ; 220).

12. Pièce de support pour outil amovible pour un bras de support d'outil d'une machine-outil, avec l'une des deux sections d'accouplement d'un accouplement, selon l'une des revendications précédentes, pour l'insertion dans une pièce d'admission correspondante comportant l'autre section d'accouplement correspondante.

13. Pièce de rallonge ou pièce intermédiaire pour un bras de support d'outil d'une machine-outil, comportant d'un côté l'une des deux sections d'accouplement de l'accouplement selon l'une des revendications 1 à 11.

14. Pièce d'admission de base pour un bras de support d'outil d'une machine-outil, avec l'une des deux sections d'accouplement de l'accouplement selon l'une des revendications 1 à 11, pour l'admission d'une pièce de support d'un outil amovible selon la revendication 12 ou d'une pièce de rallonge ou pièce intermédiaire selon la revendication 13.

15. Bras de support d'outil, constitué d'une pièce de support d'outil amovible selon la revendication 12, d'une pièce d'admission de base selon la revendication 14 et de façon optionnelle d'une pièce de rallonge ou pièce intermédiaire selon la revendication 13.

16. Machine-outil avec une jonction, avec une section d'accouplement de l'accouplement selon l'une des revendications 1 à 11, pour accoupler une pièce de support d'outil amovible selon la revendication 12, une pièce de rallonge ou pièce intermédiaire selon la revendication 13, une pièce d'admission de base selon la revendication 14 ou un bras de support d'outil selon la revendication 15.
